# EUROPEAN PATENT APPLICATION

(11) **EP 2 116 591 A1**
(43) Date of publication of application: **11.11.2009**
(21) Application number: 09155563.1
(22) Date of filing: 19.03.2009
(51) Int. Cl.: C11C 3/00, B01J 8/24, C10L 1/02

(54) **Method for Esterification of Fatty Acids in Glyceryl Esters in A Tubular Reactor**

(30) Priority: 05.05.2008 US 126444 P
(71) Applicant: Rohm and Haas Company, Philadelphia, PA 19106-2399 (US)
(72) Inventor: Banavali, Rajiv Manohar, Rydal, PA 19046 (US); Hanlon, Robert Tryon, Philadelphia, PA 19107 (US); Sarafinas, Aaron, Ivyland, PA 18974 (US); Schultz, Alfred Karl, Maple Glen, PA 19002 (US); Teich, Cheryl Irene, Chalfont, PA 18914 (US); Trejo, Jose Antonio, Lansdale, PA 19446 (US)
(74) Representative: Kent, Venetia Katherine

(57) **Abstract**

A continuous process for esterification of fatty acids in glyceryl esters with C₁-C₈ aliphatic alcohols in a tubular reactor. The method uses an expanded resin catalyst bed in the tubular reactor.

## Description

### Background

This invention relates generally to a continuous method for esterification of free fatty acids in glyceryl esters in a tubular reactor to produce glyceryl esters containing fatty acid alkyl esters.

High fuel prices and environmental concerns are driving development of alternative fuels, especially those derived from renewable resources. One such fuel, commonly known as "biodiesel" fuel, contains alkyl (usually methyl) esters of fatty acids, and is burned in diesel engines. Biodiesel fuel is produced from transesterification of triglycerides, such as vegetable oils with alcohols, typically with methanol. Since small amounts of free fatty acids present in triglycerides cause problems in the transesterification process, including foaming in the reaction mixture, biodiesel starting material often undergoes an esterification process prior to transesterification, often in a continuous-flow tubular plug-flow reactor having a packed catalyst bed. However, E. Santacesaria et al., in Ind. Eng. Chem. Res. 46, 8355-62 (2007) found that well-stirred slurry reactors and spray tower loop reactors gave better conversion of fatty acids to esters than plug-flow reactors.

The problem addressed by this invention is to find an improved method for esterification of free fatty acids in glyceryl esters in a tubular reactor.

### Statement of Invention

The present invention is directed to a continuous process for esterification of fatty acids in glyceryl esters with C₁-C₈ aliphatic alcohols or diols in a tubular reactor; said method comprising steps of: (a) providing a resin catalyst bed in the tubular reactor; and (b) causing a reaction mixture comprising: (i) a glyceryl ester; and (ii) a C₁-C₈ aliphatic alcohol or diol to flow upward through the resin catalyst bed; wherein the resin catalyst bed is expanded by at least 15% by volume.

### Detailed Description

All percentages are weight percentages, and all temperatures are in °C, unless otherwise indicated. Weight percentages of ion exchange resin are based on dry resin. An "alkyl" group is a saturated hydrocarbyl group having from one to twenty carbon atoms in a linear, branched or cyclic arrangement. In one preferred embodiment, alkyl groups are acyclic. A "glyceryl ester" is a mono-, di- or tri-fatty acid ester of glycerine, e.g., glycerine mono- and/or di-oleate; glycerine mono- and/or di-cocoate; glycerine mono- and/or di-stearate; glycerine mono- and/or di-palmitate, and combinations thereof. "Triglycerides" used in this invention are fats or oils comprising glycerine triesters of fatty acids. Preferably, triglycerides are in the form of vegetable oils, but animal fats can also be used as a starting material. Fatty acids are acyclic aliphatic carboxylic acids containing from 8 to 22 carbon atoms; typically, they contain from 12 to 22 carbon atoms. With respect to carbon-carbon bonds, the fatty acids may be saturated, monounsaturated or polyunsaturated (typically 2 or 3 carbon-carbon double bonds). Natural fats may also contain small amounts of other esterified, or free fatty acids, as well as small amounts (1-4%) of phospholipids, e.g., lecithin, and very small amounts (<1%) of other compounds, e.g., tocopherols.

In some embodiments of the invention, the glyceryl ester contains from 1% to 99% free (unesterified) fatty acids, alternatively up to 80%, alternatively up to 50%, alternatively up to 40%, alternatively up to 30%, alternatively up to 20%, alternatively up to 10%. In some embodiments, the glyceryl ester contains at least 1% free fatty acids, alternatively at least 2%, alternatively at least 3%, alternatively at least 5%. In some embodiments of the invention, the glyceryl ester contains from 2% to 40% free fatty acids.

As used herein the term "(meth)acrylic" refers to acrylic or methacrylic. The term "vinyl monomer" refers to a monomer suitable for addition polymerization and containing a single polymerizable carbon-carbon double bond. The term "styrene polymer" or "styrenic polymer" indicates a copolymer polymerized from a vinyl monomer or mixture of vinyl monomers containing at least one styrene monomer (styrene or substituted styrene) and/or at least one crosslinker, wherein the combined weight of styrene monomers and crosslinkers is at least 50 wt % of the total monomer weight, alternatively at least 75 wt %, alternatively at least 90 wt %. Styrene monomers include, e.g., styrene, α-methylstyrene, and ethylstyrene. A crosslinker is a monomer containing at least two polymerizable carbon-carbon double bonds, including, e.g., divinyl aromatics; di-, tri- and tetra-(meth)acrylates or (meth)acrylamides; di-, tri- and tetra-allyl ethers and esters; di-, tri- and tetra-(meth)acrylate esters and ethers; polyallyl and polyvinyl ethers of glycols and polyols Preferably, the crosslinker(s) has two polymerizable carbon-carbon double bonds, e.g., divinylaromatic crosslinkers, e.g., divinylbenzene (DVB). In some embodiments, a styrene polymer is made from a mixture of monomers that is at least 75% styrene and divinylaromatic crosslinkers, more preferably at least 90% styrene and divinylaromatic crosslinkers, and most preferably from a mixture of monomers that consists essentially of styrene and at least one divinylaromatic crosslinker. In other embodiments, a styrene polymer is made from a monomer mixture consisting essentially of at least one divinylaromatic crosslinker. The term "acrylic polymer" indicates a copolymer formed from a mixture of vinyl monomers containing at least one (meth)acrylic acid, ester or amide, along with at least one crosslinker, wherein the combined weight of the (meth)acrylic acid(s) or ester(s) and the crosslinker(s) is at least 50 weight percent of the total monomer weight; preferably at least 75%, more preferably at least 90%, and most preferably from a mixture of monomers that consists essentially of at least one (meth)acrylic acid or ester and at least one crosslinker, preferably a difunctional crosslinker, e.g., divinylbenzene.

Ion exchange resins contain polymerized units of a multiethylenically unsaturated monomer (crosslinker). Preferably, the level of crosslinker in the resin is from 0.1% to 20%, alternatively from 0.5% to 12%. Gel resins preferably have a crosslinker level of 0.25% to 4%. Macroreticular resins preferably have a crosslinker level of 3.5% to 12%. In some embodiments the resin is an acrylic resin, typically containing 88% to 99.5% monomer residues of (meth)acrylic acid and 0.5% to 12% residues of a cross-linker, alternatively 88% to 96.5% monomer residues of (meth)acrylic acid and 3.5% to 12% residues of a cross-linker, alternatively 96% to 99.5% monomer residues of (meth)acrylic acid and 0.5% to 4% residues of a cross-linker.

In some embodiments of the invention, the resin catalyst is a gel-type acidic ion exchange resin having 0.25% to 2.75% crosslinker. Preferably, the level of crosslinker in the resin is no more than 2.5%, alternatively no more than 2.25%, alternatively no more than 2%, alternatively no more than 1.75%. In some embodiments, the level of crosslinker is at least 0.5%, alternatively at least 0.75%, alternatively at least 1%. In some embodiments, the ion exchange resin is a gel-type resin, not a macroreticular resin. A macroreticular resin is a resin having a surface area from 25 m²/g to 200 m²/g and an average pore diameter from 50 Å to 500 Å; alternatively a surface area from 30 m²/g to 80 m²/g and an average pore diameter from 100 Å to 300 Å. Suitable gel-type resins include, e.g., acrylic resins, styrenic resins, and combinations thereof. Resins contain polymerized units of a multiethylenically unsaturated monomer (crosslinker). Preferably, the average particle size of the gel resin is from 100 µm to 2000 µm, more preferably from 200 µm to 800 µm. In some embodiments of the invention, the ion exchange resin comprises polymerized units of styrene and a crosslinker. In some embodiments of the invention, the acid functionality of the ion exchange resin comprises sulfonic acid groups, carboxylic acid groups, phosphoric acid groups or a mixture thereof. A typical acidic ion exchange resin has from 0.4 to 16 meq/g acid functionality, on a dry basis, alternatively at least 2 meq/g, alternatively at least 4 meq/g, alternatively at least 6 meq/g; alternatively no more than 14 meq/g. Preferably, the acid functionality is in the form of sulfonic acid groups.

Preferably, the resin catalyst is contacted with the reaction mixture under conditions suitable for esterification. In some embodiments of the invention, the reaction mixture is heated in a temperature range from 40°C to 226°C for at least 10 minutes in contact with the catalyst. The upper end of this range corresponds to use of supercritical methanol. Alternatively, the temperature is at least 50°C, alternatively at least 55°C, alternatively at least 60°C, alternatively at least 70°C. Alternatively, the temperature is no greater than 150°C, alternatively no greater than 130°C, alternatively no greater than 110°C, alternatively no greater than 90°C, alternatively no greater than 85°C, alternatively no greater than 80°C, alternatively no greater than 75°C. Typically, the catalyst is removed from the reaction mixture by filtration, centrifugation, or any other standard method for separating solids and liquids. Preferably, the contact time between the reaction mixture and the catalyst is at least 15 minutes, alternatively at least 20 minutes, alternatively at least 30 minutes. Preferably, the contact time is no more than 6 hours, alternatively no more than 4 hours, alternatively no more than 2 hours.

In some embodiments of the invention, the C₁-C₈ aliphatic alcohol or diol is a C₁-C₄ alcohol; alternatively it is methanol, ethanol or n-butanol; alternatively it is methanol or ethanol; and most preferably methanol. In one embodiment of the invention, the C₁-C₈ aliphatic alcohol or diol is a C₁-C₈ diol, alternatively a C₁-C₄ diol, e.g., ethylene glycol. In some embodiments of the invention, the alcohol is present in the initial reaction mixture in an amount of at least 1.1 equivalents based on the glyceryl ester, alternatively at least 2 equivalents, alternatively at least 5 equivalents, alternatively at least 10 equivalents, alternatively at least 15 equivalents. In some embodiments of the invention, the alcohol is present in an amount of no more than 40 equivalents, alternatively no more than 30 equivalents.

In the present invention, the resin catalyst bed is expanded by at least 15% by volume while the reaction mixture is flowing through the reactor. In some embodiments of the invention, the resin catalyst bed is expanded by at least 20% by volume, alternatively at least 25%, alternatively at least 30%, alternatively at least 40%, alternatively at least 50%; preferably the bed is expanded no more than 100%, alternatively no more than 75%. In some embodiments, this expansion may be accomplished by adjusting the flow rate of the reaction mixture such that the flow of reaction mixture expands the bed by this amount. One skilled in the art can easily determine appropriate flow conditions for any desired degree of expansion from the available literature on fluidized beds. In particular, literature on expansion of ion exchange resin beds at varying flow rates may be useful, see, e.g., http://www.amberlyst.com/literature/us/36wet.pdf. In some cases, a sufficient flow rate to expand the bed to the desired degree may not be possible because the corresponding residence time may be too small to achieve high conversion of starting materials. In such cases, the bed also may be expanded partially by means of a radial mechanical impeller in the bed. The required agitation rate to achieve a desired bed expansion may be determined easily. In other cases, the desired flow rate to achieve a target conversion of starting material may be insufficient to expand the bed at all. In such cases, the bed may be expanded solely by means of a mechanical agitator. For the purposes of this invention, upward flow is defined as flow from the bottom towards the top of a reactor oriented substantially vertically.

## Claims

1. A continuous process for esterification of fatty acids in glyceryl esters with C₁-C₈ aliphatic alcohols or diols in a tubular reactor; said method comprising steps of:
(a) providing a resin catalyst bed in the tubular reactor; and
(b) causing a reaction mixture comprising: (i) a glyceryl ester; and (ii) a C₁-C₈ aliphatic alcohol or diol to flow upward through the resin catalyst bed; wherein the resin catalyst bed is expanded by at least 15% by volume.

2. The continuous process of claim 1 in which the catalyst bed is expanded by adjusting the flow rate of the reaction mixture.

3. The continuous process of claim 2 in which the resin catalyst is an acidic ion exchange resin.

4. The continuous process of claim 3 in which the reaction mixture is in contact with catalyst in the reactor in a temperature range from 60°C to 150°C for at least 15 minutes.

5. The continuous process of claim 4 in which the C₁-C₈ aliphatic alcohol or diol is methanol or ethanol, and the glyceryl ester is a triglyceride.

6. The continuous process of claim 1 in which the catalyst bed is agitated with a mechanical impeller.

7. The continuous process of claim 6 in which the resin catalyst is an acidic ion exchange resin.

8. The continuous process of claim 7 in which the reaction mixture is in contact with catalyst in the reactor in a temperature range from 60°C to 150°C for at least 15 minutes.

9. The continuous process of claim 8 in which the C₁-C₈ aliphatic alcohol or diol is methanol or ethanol, and the glyceryl ester is a triglyceride.
